# EUROPEAN PATENT APPLICATION

(11) **EP 1 296 504 A1**
(43) Date of publication of application: **26.03.2003**
(21) Application number: 01932279.1
(22) Date of filing: 25.05.2001
(51) Int. Cl.: H04M 11/00, H04N 7/14, H04M 1/00, H04Q 9/00

(54) **COMMUNICATION DEVICE**

(30) Priority: 29.05.2000 JP 2000158107
(71) Applicant: Ginganet Corporation, Osaka-shi, Osaka 550-0012 (JP)
(72) Inventor: SUDO, Satoru c/o GINGANET Corporation, Osaka-shi, Osaka 550-0012 (JP)
(74) Representative: Schubert, Siegmar
(86) International application number: JP0104423
(87) International publication number: WO01093556

(57) **Abstract**

A videophone device 1 for providing audio and video communication via a communication line, through operation of the remote controller 25. In the videophone device 1, a special button 23 having an answer button function is provided on a device body 31. When an incoming call from a remote telephone device is received, a press of the special button 23 allows the videophone device 1 to establish a communication line with the remote telephone device. Even if the remote controller is lost, the videophone device 1 enables minimum operations which would be required for the period until the remote controller is found.

## Description

### TECHNICAL FIELD

The present invention relates to a communication device which provides audio and video communication via a communication line, through operation of a remote controller.

### BACKGROUND ART

As conventionally known, there is a communication device of the type which executes answering, calling and other like operations by means of a remote controller (e.g. a videophone device). In this type of videophone device, the device body is equipped with no operation buttons for executing such operations. Therefore, once the remote controller is lost, it is actually impossible to operate the videophone device.

Specifically, loss of the remote controller results in following problems. For example, a user cannot answer the call, even though an incoming call from a remote telephone device is received and notified by a bell ringing from the device body. Besides, if a user wishes to disconnect a line during communication, the user cannot disconnect it without a remote controller. Further, if a user wishes to make a call from the videophone device, no call can be made without a remote controller.

The present invention is made to solve these problems. It is an object of the present invention to provide a communication device which enables, even when the remote controller is lost, minimum operations which would be required for the period until the remote controller is found.

### DISCLOSURE OF THE INVENTION

In order to solve the above problems, the present invention concerns a communication device which provides audio and video communication via a communication line, through operation of a remote controller. This communication device comprises an answer button provided on a device body, and, when an incoming call from a remote communication device is received, a press of the answer button allows the communication device to establish a communication line with the remote communication device.

According to the present invention with this feature, when an incoming call from a remote communication device is received and notified by a bell ringing from the device body, a user can answer the incoming call by pressing the answer button on the device body, even if the remote controller is lost.

The present invention also concerns a communication device which provides audio and video communication via a communication line, through operation of a remote controller. This communication device comprises a hang-up button provided on a device body, and, during communication with a remote communication device, a press of the hang-up button allows the communication device to disconnect the communication.

According to the present invention with this feature, when, for example, a user wishes to disconnect an ongoing communication with the remote communication device, the user can disconnect a line by pressing the hang-up button on the device body, even if the remote controller is lost.

The present invention further concerns a communication device which provides audio and video communication via a communication line, through operation of a remote controller. This communication device comprises a call button provided on a device body, and, when the device body is not in action, a press of the call button allows the communication device to make a call to a pre-registered line number.

According to the present invention with this feature, a user can make a call to the pre-registered line number by pressing the call button on the device body, even if the remote controller is lost.

Still further, the present invention concerns a communication device which provides audio and video communication via a communication line, through operation of a remote controller. This communication device comprises a special button provided on a device body. When an incoming call from a remote communication device is received, a press of the special button allows the communication device to establish a communication line with the remote communication device; during communication with the remote communication device, a press of the special button allows the communication device to disconnect the communication; and, when the device body is not in action, a press of the special button allows the communication device to make a call to a pre-registered line number.

According to the present invention with this feature, when an incoming call from a remote communication device is received and notified by a bell ringing from the device body, a user can answer the incoming call by pressing the special button on the device body, even if the remote controller is lost. Likewise, when, for example, a user wishes to disconnect an ongoing communication with the remote communication device, the user can disconnect a line by pressing the special button on the device body. Further, when the device is not in action, a user can make a call to the pre-registered line number by pressing the special button on the device body.

Furthermore, the present invention concerns a communication device which provides audio and video communication via a communication line, through operation of a remote controller. This communication device comprises a special button provided on a device body. The special button has two of the following functions to be executed with a press of the special button: an answer function to be executed when an incoming call from a remote communication device is received, for establishing a communication line with the remote communication device; a hang-up function to be executed during communication with the remote communication device, for disconnecting the communication; and a call function to be executed when the device body is not in action, for making a call to a pre-registered line number.

According to the present invention with this feature, the special button is selectively given two required functions and is capable of properly executing either of the given functions, depending on the situation.

### BRIEF DESCRIPTION OF DRAWINGS

Fig. 1 is a circuit block diagram which represents an embodiment of the videophone device, as an example of the communication device of the present invention.
Fig. 2 is an external view showing the entire construction of the videophone device, as an example of the communication device of the present invention.

### BEST MODE FOR CARRYING OUT THE INVENTION

Hereinafter, embodiments of the present invention are described with reference to the drawings.

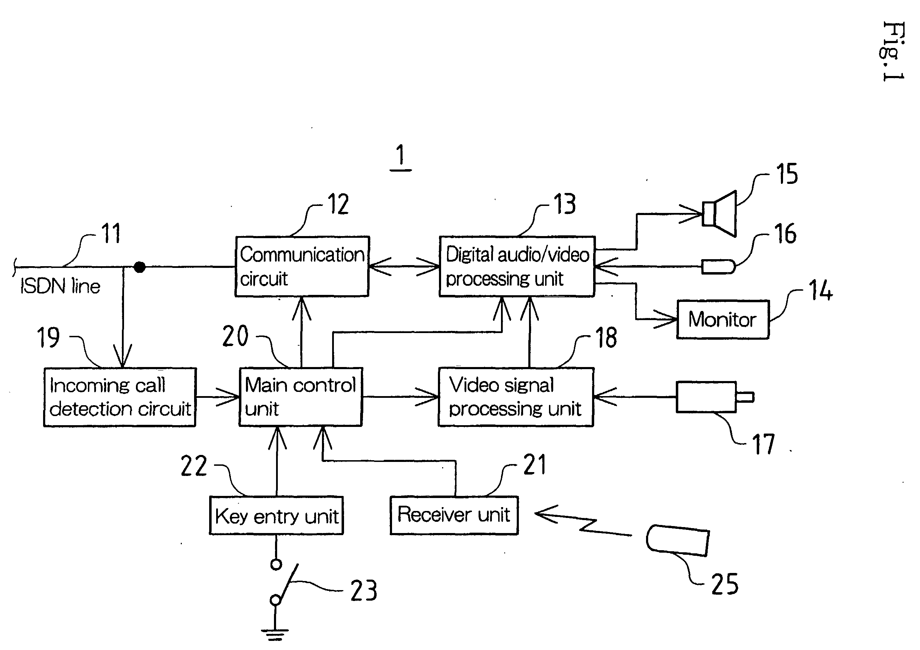

Fig. 1 is a circuit block diagram which represents an embodiment of the videophone device, as an example of the communication device of the present invention.

In a videophone device 1, an ISDN line 11 is connected via a communication circuit 12 to a digital audio/video processing unit 13. The digital audio/video processing unit 13 is connected to a monitor 14 such as a television set, and supplies a digital video output to the monitor 14. The digital audio/video processing unit 13 also supplies a digital audio output to a speaker. Besides, the digital audio/video processing unit 13 receives an audio input sent from a microphone 16.

In addition, a camera unit 17 for taking user's pictures sends its output to a video signal processing unit 18, the output of which is transmitted to the digital audio/video processing unit 13.

As for the ISDN line 11, it is connected with an incoming call detection circuit 19 for detecting a call received from a remote videophone device. The output of the incoming call detection circuit 19 is supplied to a main control unit 20 which controls the videophone device as a whole. The main control unit 20 is constituted with a CPU, ROM, RAM or the like. When answering or making a call, the main control unit 20 controls operations of the communication circuit 12, the digital audio/video processing unit 13 and the video signal processing unit 18, thereby controlling audio/video communication with the remote videophone device.

The main control unit 20 is also connected with a receiver unit 21 for receiving an infrared operation signal from a remote controller 25. Based on various operation signals from the remote controller 25, the main control unit 20 controls operations of the communication circuit 12, the digital audio/video processing unit 13 and the video signal processing unit 18.

The main control unit 20 of this embodiment is further connected with a key entry unit 22, to which a switch 23 having a special function (hereinafter called "special button") is connected.

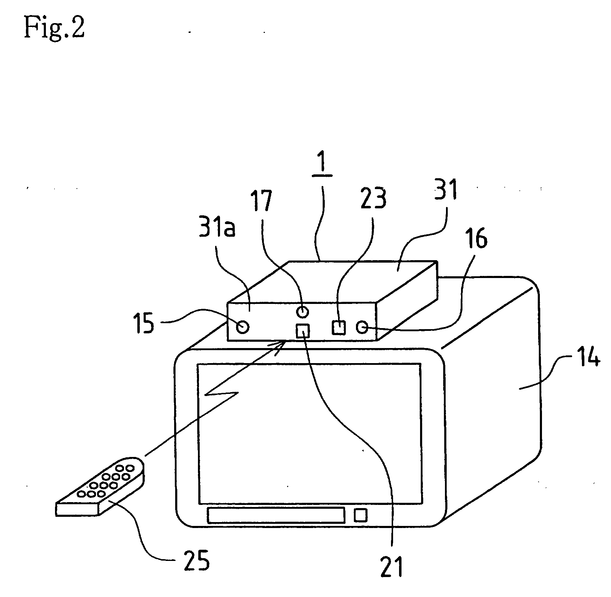

In this embodiment, the videophone device of the above construction is a set top-type device. For use, a device body 31 is placed on a television set 14 which serves as a monitor, as shown in Fig. 2.

For such use, the front face 31a of the device body 31 is equipped with the receiver unit 21 for receiving a signal from the remote controller 25, the camera unit 17 for taking pictures of an user in front of the television set 14, the microphone 16 for inputting the user's voice, the speaker 15 for outputting the voice of a user of the remote telephone device, and the special button 23.

The main control unit 20 is operated not only by the remote controller 25 but also by the special button 23. With a press of the special button 23, the main control unit 20 executes the functions allotted to the special button 23. The functions to be allotted to the special button 23 may include, for example, an answer button function for answering an incoming call, a hang-up button function for disconnecting a communication state, a call button function for making a call to a certain pre-registered line number, and a complex function combining these functions.

Next, the description turns to processing operations of the videophone device of this construction, with the special button 23 allotted with each of the above functions.

### (1) Special button 23 used as the answer button

When an incoming call from a remote videophone device (not shown) is received via the ISDN line 11, the incoming signal is detected by the incoming call detection circuit 19 and inputted to the main control unit 20. Based on the received signal, the main control unit 20 allows the speaker 15 to produce a ring tone (calling sound) via the digital audio/video processing unit 13. At this moment, the monitor 14 may be turned on to display a message "Answer the call?" on the screen. In response to the ring tone and the-screen indication, a user can answer the call by operating an answer button (not shown) on the remote controller 25. This operation signal is received by the receiver unit 21 and inputted to the main control unit 20. Based on this operation signal, the main control unit 20 controls the communication circuit 12, acquires the ISDN line 11, and establishes a communication line with the remote videophone device.

The foregoing operation is the general operation using the remote controller 25. On the other hand, the following operation is to be performed when the remote controller 25 is lost.

In the case of the conventional remote controller-type videophone device, a user who has lost the remote controller 25 cannot answer a call, despite the ring tone output from the speaker 15 and the message "Answer the call?" indicated on the monitor 14. In contrast, under the same situation, the present embodiment enables the user to answer the call, with a press of the special button (answer button) 23 provided on the device body 31. To be specific, the operation signal from the special button 23 is transmitted to the main control unit 20, via the key entry unit 22. The main control unit 20 recognizes the entry signal from the key entry unit 22 as the operation signal from the answer button. Based on this recognition, the main control unit 20 controls the communication circuit 12, acquires the ISDN line 11, and establishes a communication line with the remote videophone device. In this manner, it is possible to answer an incoming call from the remote videophone device, even when the remote controller 25 is lost.

### (2) Special button 23 used as the hang-up button

To disconnect a line during (or at the end of) communication with a remote videophone device (not shown) via the ISDN line 11, a user operates a hang-up button (not shown) on the remote controller 25. This operation signal is received by the receiver unit 21 and inputted to the main control unit 20. On receipt of the operation signal, the main control unit 20 displays a message such as "Disconnect the line?" on the screen of the monitor 14. In this situation, if the user operates the hang-up button (not shown) on the remote controller 25 again, another operation signal is received by the receiver unit 21 and inputted to the main control unit 20. Based on this operation signal, the main control unit 20 controls the communication circuit 12, releases the acquired ISDN line 11, and disconnects the line.

The foregoing operation is the general operation using the remote controller 25. On the other hand, the following operation is to be performed when the remote controller 25 is lost.

In the case of the conventional remote controller-type videophone device, a user who has lost the remote controller 25 cannot disconnect a line during (or at the end of) communication with a remote videophone device, against his/her intention. In contrast, the present embodiment enables the user to disconnect the line, with a press of the special button (hang-up button) 23 provided on the device body 31, when the user wishes to disconnect the line in the midst of communication. To be specific, the operation signal from the special button 23 is transmitted to the main control unit 20, via the key entry unit 22. On receiving the operation signal from the key entry unit 22, the main control unit 20 shows a message such as "Disconnect the line?" on the screen of the monitor 14. In this situation, if the user operates the special button 23 on the device body 31 again, another operation signal is received by the receiver unit 21 and inputted to the main control unit 20. Based on this operation signal, the main control unit 20 controls the communication circuit 12, releases the acquired ISDN line 11, and disconnects the line. In this manner, it is possible to disconnect the line during (or at the end of) communication, even when the remote controller 25 is lost.

### (3) Special button 23 used as the calling button

While no communication is established, a user makes a call to a remote videophone device (not shown) via the ISDN line 11, by operating a call button (not shown) on the remote controller 25. This operation signal is received by the receiver unit 21 and inputted to the main control unit 20. On receipt of this operation signal, the main control unit 20 controls the communication circuit 12 and acquires the ISDN line 11. Thereafter, when the user enters a line number by the remote controller 25, the operation signal is received by the receiver unit 21 and inputted to the main control unit 20. The main control unit 20 dials the line number to make a call to the remote videophone device (not shown).

The foregoing operation is the general operation using the remote controller 25. On the other hand, the following operation is to be performed when the remote controller 25 is lost.

In the case of the conventional remote controller-type videophone device, a user who has lost the remote controller 25 cannot make a call to a remote videophone device. In contrast, the present embodiment enables the user to make a call to a certain remote videophone device, with a press of the special button (call button) 23 provided on the device body 31. To be specific, on operation of the special button 23, the operation signal is transmitted to the main control unit 20 via the key entry unit 22. When receiving the operation signal from the key entry unit 22, the main control unit 20 controls the communication circuit 12 and acquires the ISDN line 11. At this moment, the main control unit 20 reads out a certain line number which is pre-registered in the memory unit (not shown) and dials the line number, thereby making a call to a remote videophone device (not shown). In this manner, it is possible to make a call to the certain line number, even when the remote controller 25 is lost. With regard to the memory unit, use may be made of the RAM which constitutes the main control unit 20. Instead, an exclusive memory for storing a line number (e.g. flash memory, EPROM, EEROM) may be used as such.

### (4) Special button 23 as a multifunctional button

As an example of utilizing a multifunctional special button 23, the special button 23 may be automatically allotted to any of the answer button, the hang-up button or the call button, according to the operation modes of the present videophone device. To be specific, if operation of the special button 23 occurs when the videophone device receives an incoming call (with the ring tone (calling sound) ringing), the special button 23 functions as the answer button for answering the call, as in the case (1) above. If operation of the special button 23 occurs during (or at the end of) communication, the special button 23 serves as the hang-up button for disconnecting the line, as in the case (2) above. If operation of the special button 23 occurs when the videophone device is not in action, the special button 23 acts as the call button for making a call to a certain line number, as in the case (3) above. These functions are automatically allotted to the special button 23 under control of the main control unit 20, which gets hold of the operation state of the present videophone device.

In the above description of the case (4), the special button 23 involves all the functions of the answer button, the hang-up button and the call button. Alternatively, the special button 23 may have only two of these button functions in combination.

Although the above embodiments apply the videophone device of the present invention to a set top box-type device, the present invention is also applicable to a videophone device integrated into a television. Namely, the present invention is generally applicable to the videophone device which answers and makes a call by means of a remote controller. In addition, the present invention is not limited to the videophone device, but generally applicable to the communication device utilizing a remote controller.

### INDUSTRIAL APPLICABILITY

As described above, the communication device concerning the present invention is useful as a communication device of the type which executes answering, calling and other like operations by means of a remote controller. Advantageously, functions of this communication device are not impaired by such accidents as loss or failure of the remote controller.

## Claims

1. A communication device which provides audio and video communication via a communication line, through operation of a remote controller,
which comprises an answer button provided on a device body,
wherein, when an incoming call from a remote communication device is received, a press of the answer button allows the communication device to establish a communication line with the remote communication device.

2. A communication device which provides audio and video communication via a communication line, through operation of a remote controller,
which comprises a hang-up button provided on a device body,
wherein, during communication with a remote communication device, a press of the hang-up button allows the communication device to disconnect the communication.

3. A communication device which provides audio and video communication via a communication line, through operation of a remote controller,
which comprises a call button provided on a device body,
wherein, when the device body is not in action, a press of the call button allows the communication device to make a call to a pre-registered line number.

4. A communication device which provides audio and video communication via a communication line, through operation of a remote controller,
which comprises a special button provided on a device body, wherein:
when an incoming call from a remote communication device is received, a press of the special button allows the communication device to establish a communication line with the remote communication device;
during communication with the remote communication device, a press of the special button allows the communication device to disconnect the communication; and
when the device body is not in action, a press of the special button allows the communication device to make a call to a pre-registered line number.

5. A communication device which provides audio and video communication via a communication line, through operation of a remote controller,
which comprises a special button provided on a device body,
wherein the special button has two of the following functions to be executed with a press of the special button:
an answer function to be executed when an incoming call from a remote communication device is received, for establishing a communication line with the remote communication device;
a hang-up function to be executed during communication with the remote communication device, for disconnecting the communication; and
a call function to be executed when the device body is not in action, for making a call to a pre-registered line number.
